# EUROPEAN PATENT SPECIFICATION

(11) **EP 1 895 789 B1**
(45) Date of publication and mention of the grant of the patent: **04.11.2009**
(21) Application number: 06018179.9
(22) Date of filing: 31.08.2006
(51) Int. Cl.: H04W 88/02

(54) **A method for accessing an additional service provided by an IC card toolkit applet**
Verfahren für den Zugriff auf einen zusätzlichen Dienst mittels eines Applikationen-Toolkits einer IC-Karte
Procédé pour accéder à un service supplémentaire utilisant les outils d'application d'une carte à puce

(43) Date of publication of application: 05.03.2008
(73) Proprietor: Incard SA, 1204 Geneva (CH)
(72) Inventor: Di Maggio, Luigi, 81054 Casapulla (Caserta) (IT); Guidobaldi, Corrado, 80125 Napoli (IT)
(74) Representative: Botti, Mario

(56) References cited:
- EP-A- 1 569 477
- WO-A-01/24494
- US-A- 5 848 140

## Description

### Field of Application

The present invention relates to a method for selecting one or more additional services in a mobile equipment, of the type comprising means to dial a number in order to set up a telephone communication, the additional services being provided by an IC Card hosted in the mobile equipment.

More particularly, the present invention relates to a method of the type described above wherein the additional service is selected through a navigation of a menu, displayed by the mobile equipment.

### Prior Art

As it is well known, a mobile equipment generally includes a display and a keyboard intended to support an interaction with a user.

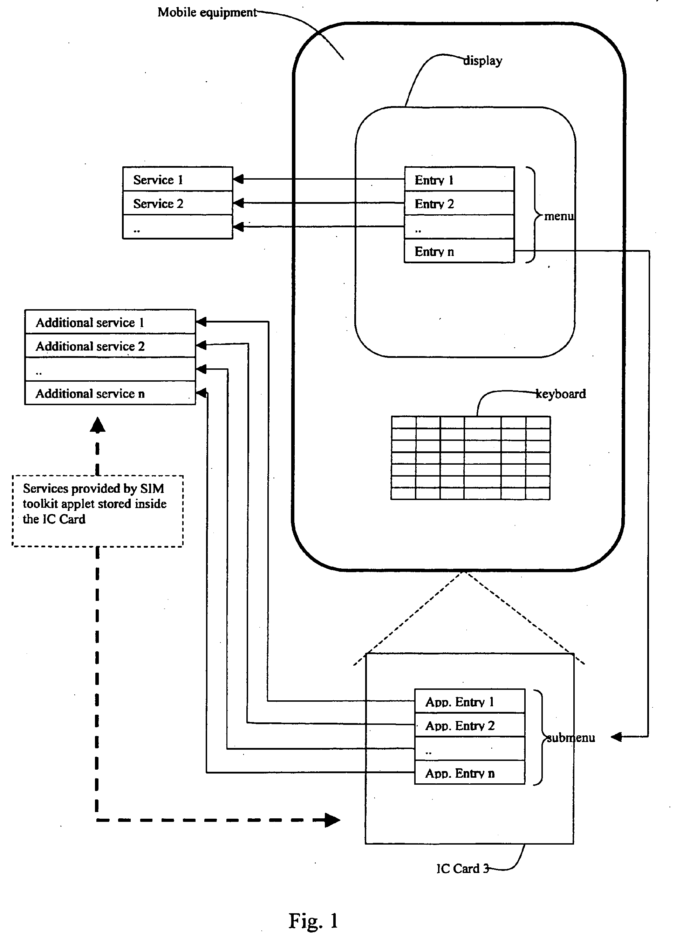

With reference to figure 1 it is schematically represented a mobile equipment with a display wherein a menu, comprising a plurality of entries, entry1, entriy2, is displayed. When a user selects an entry of the menu, a corresponding service is executed.

The service, as well as the menu comprising the corresponding entry, is provided by the mobile equipment and they depend by a manufacturer choice. For example, taking in consideration a first and a second mobile equipment, a service of writing an SMS is reached according to a different selection of entries on corresponding menus on the first and the second mobile equipment.

Additionally to the service provided by the mobile equipment, one or more additional services may be supported by an IC Card hosted inside it. Patent application N° 1 569 477 discloses a mobile equipment with providing services according to the prior art.

More particularly, a SIM toolkit applet is a specific application intended to be stored and executed on an IC Card in order to provide an additional service. Also the additional service is recalled by the mobile equipment that hosts the IC Card, for example through its keyboard.

More particularly, one or more entries inside the menu of the mobile equipment, for example the entry "entryn" shown in figure 1, provide an access to the additional services.

Generally, such additional services recalled by a submenu, comprising a plurality of application entries, App. Entry1, App. Entry 2, so that said one or more entries inside the menu of the mobile equipment provides an access to the submenu and the submenu manages the access to the additional services through the application entries.

In figure 1 it is enforced that the recall of the submenu is executed by a selection of an entry "Entryn" of the menu of the mobile equipment.

In this way, more than one additional services provided by corresponding more than one SIM toolkit applets, are called by an application entry inside the submenu, after a browsing of the menu of the mobile equipment in order to reach the entry corresponding to the submenu recall.

Currently, there is not a standard relative to the location inside the menu of the entry dedicated to recall the submenu of the additional entries.

So an additional service furnished by a SIM Toolkit applet is reached according to a different sequence of choice on the menu of the mobile equipment, depending on the model of the mobile equipment that host such IC Card.

When such sequence of choice on the mobile equipment keyboard is not user-friendly, for example because the entry for accessing the submenu is too much nested, the access to the additional service is unpractical.

To overcome such a limitation, some Telecom Operators provide an hardware solution based on a special button on the mobile equipment keyboard in order to directly access the submenu.

Anyway also an hardware solution depends on a choice of the manufacturer of the mobile equipment and it is not portable at all.

The problem at the basis of the present invention is that of providing a method for selecting one or more additional service provided by an IC Card to a mobile equipment that hosts such IC Card, avoiding the selection of a specific sequence of choice in a menu of the mobile equipment, at the same time providing a direct and immediate access to the additional services, independently by an hardware of such mobile equipment and overcoming all the limitations currently bounding the recall of additional services provided by IC Cards.

### Summary of the invention

The solution idea on which the present invention is based, is that of providing a method for associating a telephone call, based on a fictitious telephone number, for example comprising numeric digits or short telephone numbers, to recall an additional service provided by an IC Card, the method interrupting a real telephone call and recalling the additional service when it detects a relation between the composed fictitious phone number and the additional service.

This problem is solved, according to the present invention, by a method for accessing a service provided by a SIM toolkit applet as previously indicated and defined by the characterising portion of the enclosed claim 1.

Further characteristics and the advantages of the method according to the present invention will be apparent from the following description of an embodiment thereof, made with reference to the annexed drawings, given for indicative and non-limiting purpose.

### Brief description of drawings

Figure 1: schematically shows, the recalling of a submenu comprising application entries through an entry inside the menu of the mobile equipment, according to the prior art.
Figure 2: schematically shows, the method for accessing an additional service provided by a SIM toolkit applet during a composition of a telephone phone call, according to the present invention.
Figure 3: schematically shows, in a sequence of steps, the method for accessing an additional service provided by a SIM toolkit applet, according to the present invention.
Figure 4: schematically shows, an association of a fictitious telephone number to an additional service provided by a SIM toolkit applet, according to an initialization phase of the method of the present invention.
Figure 5: schematically shows, the stopping of a telephone call based on a fictitious telephone number, according to the method of the present invention.
Figure 6: schematically shows, a selection of an additional service in an application menu, according to the present invention.
Figure 7: schematically shows, in a block diagram, an interaction among a master applet and a set of menu applets, according to the method of the present invention.

### Detailed description

According to the present invention and with reference to the annexed drawings, a method for accessing an additional service provided by a SIM toolkit applet is schematically indicated with numeral reference 10.

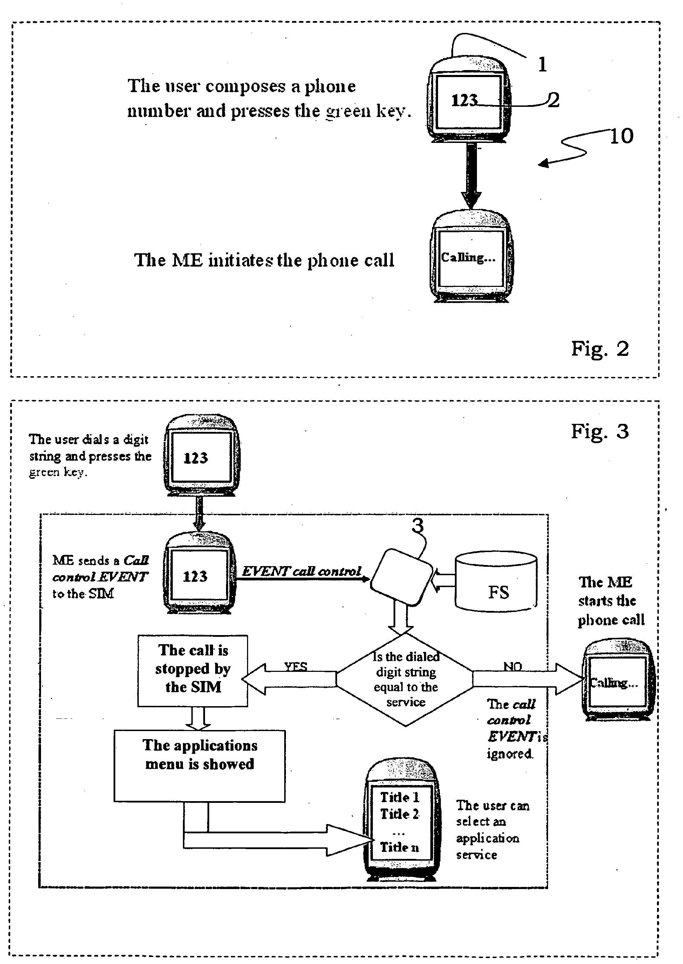

More particularly, with reference to figure 2, a mobile equipment 1 comprises a mobile equipment keyboard 2, allowing a user to interact with the mobile equipment 1 itself.

For example a user may compose a telephone number for a corresponding telephone call or browse a menu displayed on a display of the mobile equipment, providing access to services such as setting a timer, writing sms and similar. Moreover, the mobile equipment 1 hosts an IC Card 3, storing a plurality of data and one or more applications.

When the user intends to communicate through a telephone call, he composes a telephone number through the keyboard 2 and presses a specific button on the keyboard 2 in order to set up the communication with a destination telephone device, corresponding to the dialled telephone number.

According to the method of the present invention, when the user presses the specific button on the keyboard 2 of the mobile equipment 1, the dialed telephone number is compared with one or more service numbers, stored inside a memory unit of the IC Card 3.

More particularly, if the dialed telephone number matches one of the stored service numbers, the telephone call is interrupted.

According to the method of the present invention, the service numbers are recognized as fictitious telephone numbers, not intended to be mapped to a corresponding destination telephone number.

When the service number is dialed, an application menu is displayed on the display of the mobile equipment 1, as schematically represented in figure 3. More particularly, in such a figure, the user composes a service number "123" and types a specific button on the keyboard 2, for example a green button generally intended to initiate a conversation.

The mobile equipment 1, receiving a query for a telephone call, sends a Call Control event to the IC Card 3, in order to manage the telephone communication with a telephone destination device.

The operations performed by the mobile equipment 1 is standard, since the Call Control event is a standard event generated and sent to the IC Card by the mobile equipment 1 when the user dials a telephone call. When the IC Card 3 receives the Call Control event, it compares the telephone number embedded in the Call Control event to the services number stored inside the memory unit of the IC Card 3. According to the method of the present invention, an initialization phase, specified more in details in the following description, provides the storing of the service numbers.

If the telephone number associated to the Call Control event is not equal to one of the service numbers stored inside the IC Card 3, a telephone communication with a destination telephone device corresponding to the dialed telephone number is set up, in a conventional way.

Otherwise, if the telephone number associated to the Call Control event is equal to one of the service numbers stored inside the IC Card 3, the telephone call is stopped by the IC Card 3 and a submenu is shown on the mobile equipment 1 display.

More particularly, the submenu comprises one or more application entries, App. Entry 1, App. Entry 2, associated for recalling corresponding SIM toolkit applets. Through standard keys on the mobile equipment 1 keyboard 2, a user may select an application entry and start the corresponding additional service.

Each time a telephone call is dialed and activated by a user, the method of the present invention provides to compare the dialed telephone number to the pre stored service numbers, allowing a telephone call or denying it in order to display the submenu.

Without limiting the scope of the present invention, an embodiment of the method of the present invention is hereinafter described with reference to a pair of applications stored inside a memory unit of the IC Card 3.

More particularly, a first application, hereinafter indicated as master applet, is registered to the Call Control event so that it is triggered whenever a Call Control event takes place.

The master applet is in charge of:
- matching a dialed telephone number with the service numbers corresponding to additional services;
- terminating the telephone call originated by the mobile equipment when the telephone number corresponds to one of said service numbers and displaying a submenu;
- triggering a SIM toolkit applet corresponding to an application entry selected by a user in said submenu.

Moreover, the master applet is charged to perform the initialization phase in which the user associates one or more service numbers to one or more additional services.

The initialization phase is not mandatory, since the service number may be associated to an additional service for example directly by an IC card manufacturer. In this way, the dialing of a telephone number corresponding to a service number determines the direct activation of the corresponding additional services, bypassing the displaying of the submenu.

The initialization phase increases the user personalization capability according to the method of the invention, since more than one service number may be mapped to more than one additional service. Moreover, the user may choose a personal and mnemonic service number for a preferred additional service.

A SIM toolkit applet or menu applet, is stored inside the IC Card 3 and charged to implement a corresponding additional service.

More particularly, each menu applet is identified by an identification number, AID, known to the master applet. All the AIDs are for example stored in a file inside the IC Card 3, namely elementary file applet identification, EF_{AID}, intended to be read by the master applet.

One or more menu applets must share the processToolkit procedure, that is a mandatory main entry point of a SIM toolkit applet.

An interaction between the master applet and the menu applets according to the method of the present invention is based on a Shareable Interface: each time a Call Control event occurs, if the dialed telephone number matches with a stored service number, the master applet terminates the telephone call and issues a Select_Item proactive command showing the said submenu.

Each item of the Select_Item comprises a title for the menu applet, understandable by the user. Each said menu applet implements an additional service. When the user of the mobile equipment selects a menu applet through its title, the relevant processToolkit procedure is executed.

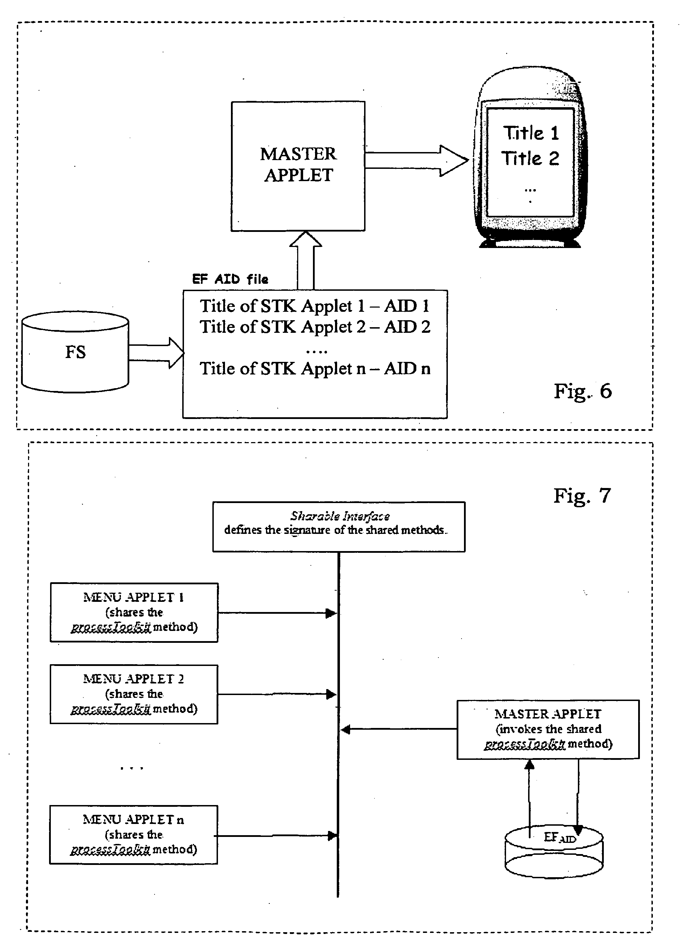

More particularly, with reference to figure 7, the master applet reads the menu applet AID in the EF_{AID} and uses the AID to trigger the requested menu applet, calling its processToolkit procedure trough the shareable interface.

The master applet is triggered when a telephone number is dialed and the green key is pressed. For example, with reference to the drawings, the telephone number composed by the user is "123" and it corresponds to a service number.

After the selection of the specific green key, a telephone call to the "123" telephone number is attempted. The master applet is then triggered on the Call Control event generated by the mobile equipment 1.

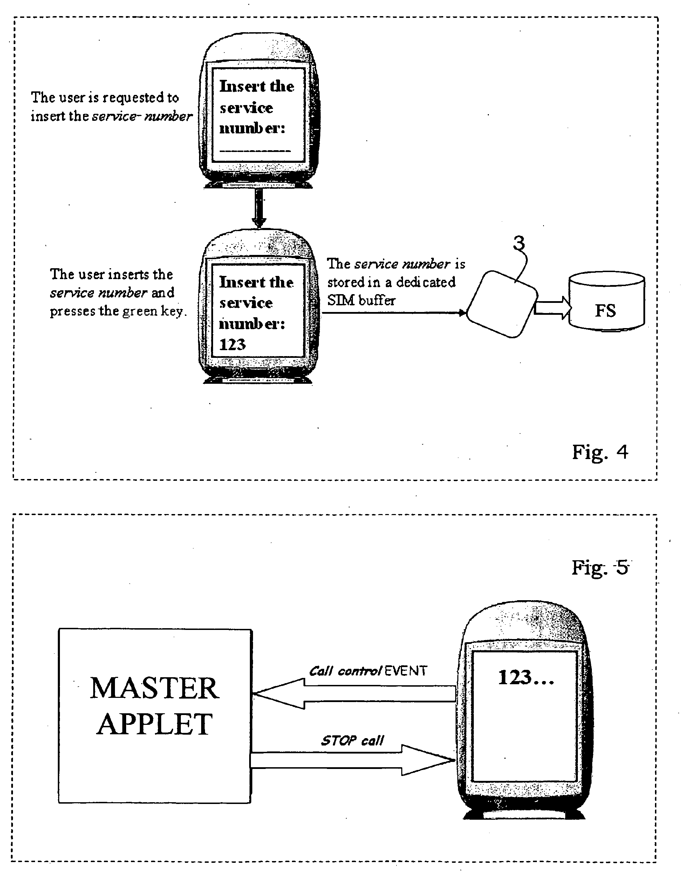

As schematically represented in figure 5, the master applet terminates the telephone call and it issues a Select_Item in which each item indicates a menu applet. Figure 6 schematically shows a list of titles associated to SIM toolkit applets, stored inside a file system FS.

The Shareable Interface comprises a signature of the Applet.processToolkit() procedure so that, since the said procedure is mandatory in each SIM toolkit applet, no additional effort is requested for the implementation of the menu applets. For completness sake it should be noted that the Applet.processToolkit() procedure is an entry point for each toolkit applet. This is the procedure that receives the Events, generated by the mobile equipment, to which the application is registered. If a toolkit applet is registered to the EVENT_MENU_SELECTION and if the user chooses the application entry corresponding to the said toolkit applet in the submenu (figure 1), an EVENT_MENU_SELECTION is generated by the mobile equipment and sent to the said registered application.

According to the method of the present invention, the master applet is registered to the CALL_CONTROL_EVENT. As soon as a telephone call is attempted, a CALL_CONTROL_EVENT is generated by the mobile equipment and sent to the IC Card. The master applet is then triggered and if the telephone number embedded in said event corresponds to a service number, the said call is stopped and the submenu of figure 1 is shown.

After the selection of an item in said submenu, the master applet gets a reference of a Shareable Interface Object (SIO) by invoking the JCSystem.getAppletShareableInterfaceObject(AID aid) procedure, being "aid" the application identifier of the selected menu applet.

The master applet invokes the SIO.processToolkit(byte event) procedure, where "event" is the EVENT_MENU_SELECTION constant. The execution of the selected menu applet takes place exactly as if it is recalled by a conventional menu of the mobile equipment.

Advantageously, when a new menu applet must be added, the method according to the invention provides that the new menu applet implements the Shareable Interface and it inserts the AID associated to the new menu applet inside the EF_{AID} file.

On the contrary, when a menu applet must be disabled, the AID of such menu applet must be removed by the EF_{AID} file.

The recall of the submenu and the execution of a menu applet may be associated to a different combination of keys on the keyboard of the mobile equipment (for instance the following group of digits may be used: *,#,+,0,1,2,3,4,5,6,7,8,9).

Advantageously, according to the method of the present invention, an IC Card may support an access to an additional service or an access to a submenu including entry points to such additional service, directly by a special dialed service number, avoiding to browse a menu on the mobile equipment. When the user dials a telephone number corresponding to a service number, an additional service provided by the IC Card may be immediately executed without any menu navigation or a submenu comprising an application entry to such additional service is displayed.

Advantageously, the method according to the present invention does not require a software or an hardware modification to the mobile equipment, being the triggering of a menu applet treated as an execution of a conventional telephone call.

## Claims

1. Method for selecting one or more additional services in a mobile equipment (1) comprising keyboard means for dialling a number in order to set up a telephone communication, said additional services being provided by an IC Card (3) hosted in the same mobile equipment (1), **characterized by** the fact that the method comprising the steps of:
- comparing a dialed number with one or more service numbers, stored inside said IC Card (3) and associated to said additional services;
- terminating said set up of a telephone communication if said dialed number is equal to one of said service numbers;
- triggering the additional service corresponding to said dialed number.

2. Method as claimed in claim 1, further providing that at least one of said additional services display a submenu on said mobile equipment, including a plurality of application entries associated to said one or more additional services.

3. Method as claimed in claim 2, further comprising the step of selecting one of said application entries in said submenu, through said means, said step of selecting launching said phase of triggering further additional services.

4. Method as claimed in claim 1, further comprising a phase of initializing, in said IC Card (3), a value for said one or more service numbers and associating said service numbers to said corresponding additional services.

5. Method as claimed in claim 1, further providing that said service numbers comprises numeric strings.

6. Method as claimed in claim 1, further comprising the step of generating a Call Control event in said mobile equipment (1) when the user dials said number and the step of sending the Call Control event to said IC Card (3), said Call Control event being compliant to a standard communication protocol between said mobile equipment (1) and said IC Card (3).

7. Method as claimed in claim 1, further comprising the steps of:
- storing menu applets inside the IC Card (3) which implement said additional services;
- registering a master applet to said Call Control Event, which is triggered when said number is dialed and which executes said steps of comparing, terminating and triggering, wherein said step of triggering is executed activating said menu applets.

8. Method as claimed in claim 7, further comprising the step of:
- associating said additional services to corresponding application identification numbers (AIDs),
- grouping said application identification numbers (AIDs) in an elementary file applet identification (EF_{AID}), inside said IC Card (3),
said elementary file applet identification (EF_{AID}) being accessed in said phase of triggering in order to retrieve said additional service.

9. Method as claimed in claim 8, further comprising a phase for adding a new additional service to said one or more additional services comprising the steps of: inserting a new application identification number (AID), associated to said new application service, inside said elementary applet identification file (EF_{AID}).

10. Method as claimed in claim 8, further comprising a phase for removing one of said additional service comprising the step of:
- removing said application identification number (AID), corresponding to one of said additional service, from said elementary applet identification file (EF_{AID}).

11. IC Card (3), storing one or more additional services, intended to be hosted by a mobile equipment (1), of the type comprising means to dial a number in order to set up a telephone communication,
**characterized by**:
- storing and associating one or more service numbers to said additional services;
- means for comparing a dialed number with one of said service numbers;
- means for terminating said set up of a communication if said means for comparing results that said dialed number is equal to one of said service numbers;
- means for triggering an additional service corresponding to said dialed number.

## Patentansprüche

1. Verfahren zur Auswahl eines oder mehrerer zusätzlicher Dienste in einem mobilen Gerät (1) umfassend Tastaturmittel zum Wählen einer Nummer, um eine Telefonverbindung aufzubauen, wobei die zusätzlichen Dienste durch eine Chipkarte (3) bereit gestellt werden, die in dem gleichen mobilen Gerät (1) aufgenommen ist, **gekennzeichnet durch** die Tatsache, dass das Verfahren die Schritte umfasst:
- Vergleichen einer gewählten Nummer mit ein oder mehreren Dienstnummern, die innerhalb der Chipkarte (3) gespeichert und mit zusätzlichen Diensten assoziiert sind;
- Beenden der aufgebauten Telefonverbindung, falls die gewählte Nummer einer der Dienstnummern entspricht;
- Auslösen der zusätzlichen Dienste entsprechend der gewählten Nummer.

2. Verfahren nach Anspruch 1, ferner bereitstellend, dass mindestens eine der zusätzlichen Dienste ein Untermenü auf dem mobilen Gerät anzeigt, beinhaltend eine Vielzahl von Anwendungseinträgen, die mit den einen oder mehreren zusätzlichen Dienste assoziiert sind.

3. Verfahren nach Anspruch 2, ferner umfassend den Schritt der Auswahl eines oder mehrerer Anwendungseinträge in dem Untermenü durch besagte Mittel, wobei der Schritt der Auswahl die Phase des Auslösens der weiteren zusätzlichen Dienste startet.

4. Verfahren nach Anspruch 1, ferner umfassend eine Phase der Initialisierung eines Wertes für die einen oder mehreren Dienstnummern und Assoziation der Dienstnummern mit entsprechend zusätzlichen Diensten in der Chipkarte (3).

5. Verfahren nach Anspruch 1, ferner bereitstellend, dass die Dienstnummern numerische Zeichenketten umfassen.

6. Verfahren nach Anspruch 1, ferner umfassend den Schritt der Erzeugung eines Anrufsteuerereignisses in dem mobilen Gerät (1), wenn der Benutzer die Nummer wählt, und den Schritt des Sendens des Anrufsteuerereignisses an die Chipkarte (3), wobei das Anrufsteuerereignis zu einem Standardkommunikationsprotokoll zwischen mobilen Geräten (1) und der Chipkarte (3) kompatibel ist.

7. Verfahren nach Anspruch 1, ferner umfassend die Schritte:
- Speichern von Menüapplets in der Chipkarte (3), welche die zusätzlichen Dienste implementieren;
- Registrieren eines Hauptapplets mit dem Anrufsteuerereignis, welches ausgelöst wird, wenn die Nummer gewählt wird, und welches die Schritte des Vergleichens, des Beendens und des Auslösens ausführt, wobei der Schritt des Auslösens zum Aktivieren der Menüapplets ausgeführt wird.

8. Verfahren nach Anspruch 7, ferner umfassend die Schritte:
- Assoziieren der zusätzlichen Dienste mit entsprechenden Applikationsidentifikationsnummern (AIDs);
- Gruppieren der Applikationsidentifikationsnummern (AIDs) in einer grundlegenden Appletidentifikationsdatei (EF_{AID}) innerhalb der Chipkarte (3),
wobei auf die grundlegende Appletidentifikationsdatei (EF_{AID}) in der Phase der Auslösung zugegriffen wird, um die zusätzlichen Dienste aufzurufen.

9. Verfahren nach Anspruch 8, ferner umfassend eine Phase zum Hinzufügen eines neuen zusätzlichen Dienstes zu den einen oder mehreren zusätzlichen Diensten umfassend die Schritte: Einfügen einer neuen Applikationsidentifikationsnummer (AID), die mit dem neuen Applikationsdienst in der grundlegenden Appletidentifikationsdatei (EF_{AID}) assoziiert ist.

10. Verfahren nach Anspruch 8, ferner umfassend eine Phase zum Entfernen einer der zusätzlichen Dienste umfassend die Schritte:
- Entfernen der Applikationsidentifikationsnummer (AID), die einer der zusätzlichen Dienste entspricht, aus der grundlegenden Appletidentifikationsdatei (EF_{AID}).

11. Chipkarte (3), die eine oder mehr zusätzliche Dienste speichert, die gedacht ist, um in einem mobilen Gerät (1) aufgenommen zu werden, der Art Mittel umfassend, um eine Nummer zu wählen, um eine Telefonverbindung bereit zu stellen, **gekennzeichnet durch**:
- Speichern und Assoziieren ein oder mehrerer Dienstnummern mit den zusätzlichen Diensten;
- Mittel zum Vergleichen einer gewählten mit ein oder mehreren der Dienstnummern;
- Mittel zum Beenden der aufgebauten Verbindung, falls die Mittel zum Vergleichen ergeben, dass die gewählte Nummer gleich ein oder mehreren Dienstnummern ist;
- Mittel zum Auslösen eines zusätzlichen Dienstes entsprechend der gewählten Nummer.

## Revendications

1. Méthode de sélection d'un ou plusieurs services additionnels dans un équipement mobile (1) comprenant un clavier pour composer un numéro afin d'établir une communication téléphonique, lesdits services additionnels étant fournis par une carte à puce (3) logée dans ledit équipement mobile (1), **caractérisée en ce que** ladite méthode comporte les étapes suivantes :
- comparaison d'un numéro composé avec un ou plusieurs numéros de service mémorisés dans la carte à puce (3) et associés auxdits services additionnels ;
- interruption dudit établissement d'une communication téléphonique si ledit numéro composé est identique à l'un desdits numéros de service ;
- déclenchement du service additionnel correspondant audit numéro composé.

2. Méthode selon la revendication 1, selon laquelle au moins un desdits services additionnels affiche un sous-menu sur ledit équipement mobile, comprenant une pluralité d'entrées d'applications associées auxdits un ou plusieurs services additionnels.

3. Méthode selon la revendication 2, comportant en outre une étape de sélection de l'une desdites entrées d'applications dans ledit sous-menu, grâce audit clavier, ladite étape de sélection ouvrant ladite phase de déclenchement des services additionnels.

4. Méthode selon la revendication 1, comportant en outre une phase d'initialisation, dans ladite carte à puce (3), d'une valeur pour ledit un ou plusieurs numéros de service et d'association desdits numéros de service avec lesdits services additionnels correspondants.

5. Méthode selon la revendication 1, selon laquelle lesdits numéros de service comprennent des chaînes numériques.

6. Méthode selon la revendication 1, comportant en outre une étape de génération d'un évènement de Contrôle d'Appel dans ledit équipement mobile (1), lorsque l'utilisateur compose ledit numéro et une étape d'envoi de l'évènement de Contrôle d'Appel à ladite carte à puce (3), ledit évènement de Contrôle d'Appel étant conforme à un protocole de communication standard entre ledit équipement mobile (1) et ladite carte à puce (3).

7. Méthode selon la revendication 1, comportant en outre les étapes suivantes :
- stockage de programmes de menu dans la carte à puce (3) qui met en oeuvre lesdits services additionnels ;
- association d'un programme maître à l'évènement de Contrôle d'Appel, laquelle est déclenchée quand un numéro est composé et exécute lesdites étapes de comparaison, d'interruption et de déclenchement, parmi lesquelles ladite étape de déclenchement est exécutée en activant lesdits programmes de menu.

8. Méthode selon la revendication 7, comportant en outre les étapes suivantes :
- association desdits services additionnels avec des numéros d'identification d'applications (AIDs) correspondants ;
- regroupement desdits numéros d'identification d'applications (AIDs) dans un fichier élémentaire d'identification de programmes (EF_{AID}), dans ladite carte à puce (3),
ledit fichier élémentaire d'identification de programmes (EF_{AID}) étant lu pendant la phase de déclenchement afin d'extraire lesdits services additionnels.

9. Méthode selon la revendication 8, comportant en outre une phase d'ajout d'un nouveau service additionnel auxdits un ou plusieurs services additionnels, comprenant une étape d'insertion d'un nouveau numéro d'identification d'applications (AIDs), associé audit nouveau service applicatif, dans ledit fichier élémentaire d'identification de programmes (EF_{AID}).

10. Méthode selon la revendication 8, comportant en outre une phase de retrait d'un desdits services additionnels, comprenant une étape de retrait dudit numéro d'identification d'applications (AIDs), correspondant à l'un desdits services additionnels, dudit fichier élémentaire d'identification de programmes (EF_{AID}).

11. Carte à puce (3), stockant un ou plusieurs services additionnels, adaptée à être logée dans un équipement mobile (1), du type comprenant des moyens pour composer un numéro afin d'établir une communication téléphonique, **caractérisée en ce que :**
- elle stocke un ou plusieurs numéros de service et les associe auxdits services additionnels ;
- elle comporte des moyens de comparaison d'un numéro composé avec l'un desdits numéros de service ;
- elle comporte des moyens pour interrompre ledit établissement d'une communication si lesdits moyens de comparaison indiquent que ledit numéro composé est identique à l'un desdits numéros de service ;
- elle comporte des moyens de déclenchement d'un service additionnel correspondant audit numéro composé.
